(19) Europäisches Patentamt

European Patent Office

Office européen des brevets

(11) **EP 1 049 274 A2**

(12) **EUROPEAN PATENT APPLICATION**

(43) Date of publication:
02.11.2000 Bulletin 2000/44

(51) Int. Cl.⁷: **H04B 10/17**

(21) Application number: **00109041.4**

(22) Date of filing: **28.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.04.1999 JP 12201399**

(71) Applicant: **NEC CORPORATION**
**Tokyo (JP)**

(72) Inventor: **Takehana, Tsukasa**
**Tokyo (JP)**

(74) Representative:
**VOSSIUS & PARTNER**
**Siebertstrasse 4**
**81675 München (DE)**

(54) **Optical repeater for wavelength division multiplexed signal light**

(57)   An optical repeater for transmitting wavelength division multiplexed signal light comprising an optical amplifier for optically amplifies a wavelength division multiplexed signal light and an optical output control circuit for controlling the optical output level constant used in a bi-directional wavelength division multiplexed signal light transmission is provided, which detects an optical input level to be input in one optical amplifier and, when the level fluctuates from a predetermined value, adjusts the level to a predetermined optical input level by branching a part of an amplified signal light to be output from the other party's optical amplifier and combines it to an input light to return it to the original optical level.

The predetermined optical level is set such that a gain obtained when each signal light is optically amplified by the optical amplifier will be a predetermined gain. Especially, by selecting a gain without the wavelength reliance of a gain of the optical amplifier, it becomes possible to uniform the level of each signal light and conduct a stable optical amplification even if the level fluctuates. Even if a certain signal light among the wavelength multiplexed signal lights has broken line or its level fluctuates, the input level of the optical amplifier is maintained constant and signal light is optically amplified properly.

FIG.5

**Description**

An optical repeater for transmitting wavelength division multiplexed signal light in accordance with this invention relates to an-optical repeater used in an optical transmission of wavelength division multiplexed signal light (WDM light) to which a plurality of signal light having different wavelengths each other is wavelength multiplexed, and to an apparatus for transmitting signal light in which the optical repeater is arranged between an optical transmitter and an optical receiver.

The technology of transmitting wavelength division multiplexed [WDM] signal light for optically amplifying altogether wavelength division multiplexed signal light in which a plurality of signal light having different wavelengths is wavelength multiplexed into a single fiber by means of an optical amplifier is indispensable for constructing a long distance and mass transmission system. In recent years, researches on the technology for transmitting wavelength division multiplexed signal light have been carried out actively. In particular, an apparatus for transmitting wavelength division multiplexed signal light with an Add/Drop Multiplexer node (hereinafter referred to as ADM node) can take into its own node signal light of a specific (or arbitrary) channel from a wavelength division multiplexed light (hereinafter referred to as WDM signal light) on its way of linear relaying or can re-multiplex the signal light of the specific channel (the signal light of the channel taken into) or signal light of a channel of an idle wavelength into a WDM signal light from its own node. Therefore, it is highly expected as a flexible light wave network building means.

An apparatus for transmitting wavelength division multiplexed signal light with an ADM node can add/drop a signal of a channel of a specific (or arbitrary) wavelength in the ADM node without converting the signal light into an electric signal in a repeater. Therefore, a transparent and flexible light wave network can be built.

However, the above mentioned conventional apparatus for transmitting wavelength division multiplexed signal light has a problem that degradation in quality of a transmitted signal arises because a level fluctuation of signal light operating normally is caused when some signal light among the wavelength division multiplexed signals is abruptly lacked due to a broken line of a certain section of a transmission path or a failure of signal light transmitting portion of a terminal station. In this regard, for example, a signal wavelength of a terminal station A may be lacked when a broken line is occurred in a transmission path between the terminal station and the ADM node.

When an optical amplifier with a constant optical outputting control is used as the optical amplifier, an output for one wavelength of an optical amplifier becomes more than a desired level if the number of signal wavelengths in a certain section changes abruptly due to the lack of the signal light. For example, when n=4, the number of wavelengths becomes 1/4 of the original 4 wavelengths and the optical output of the remaining one wavelength increases by approximately 6dB. Then, there is a possibility that the quality of signal light is degraded due to the influence of a non-linear effect arising in the transmission path due to the increase of the optical outputting level.

In the conventional apparatus for transmitting wavelength division multiplexed signal light, an optical amplifier with a constant optical outputting control is used as an optical repeater in many cases due to the simplicity of line design, the simplicity of controlling the optical amplifier and so on. However, there is a high possibility of degrading a transmission quality due to the above mentioned phenomenon. In addition, since a gain flat characteristics of the optical amplifier with a constant optical outputting control relies on an optical input level, the fluctuation of the inputting level causes degradation in the gain flat characteristics. The degradation of the gain flat characteristics can be a factor for causing dispersion among signal levels.

Due to the above mentioned reasons, signal light with a large optical input level causes characteristic degradation by the non-linear optical effect arising in the transmission path and signal light with a small optical input level causes characteristic degradation by the S/N degradation.

The first object of an optical repeater for transmitting wavelength division multiplexed signal light and an apparatus for transmitting wavelength division multiplexed signal light in accordance with the present invention is to make characteristic degradation not to arise even in the case where a level fluctuation arises to force some signal light among a plurality of signal light used in the apparatus for transmitting wavelength division multiplexed signal light to be abruptly broken.

The second object of an optical repeater for transmitting wavelength division multiplexed signal light and an apparatus for transmitting wavelength division multiplexed signal light in accordance with the present invention is to make a change of the gain's reliance on wavelength not to arise due to a change of the gain of the light amplifier even if a fluctuation in the optical input level of the wavelength division multiplexed signal light arises, so that a gain flat characteristics can be maintained.

In order to solve the above and other drawbacks, an optical repeater for transmitting wavelength division multiplexed signal light in accordance with the present invention is provided with a first optical amplifier for optically amplifying first wavelength division multiplexed signal light to which first signal light with wavelengths different each other is wavelength multiplexed and outputting first amplified wavelength division multiplexed signal light, a first optical output controlling circuit for controlling the first amplified wavelength division multiplexed signal light to a predetermined value of the optical outputting level and a second optical amplifier for optically amplifying a second signal light proceeding in the opposite direction of the first wavelength division multiplexed signal light and outputting a second amplified signal light. The first optical amplifier is provided with a first input level stabilizing circuit for detecting the optical input level of the first wavelength division multiplexed signal light (hereinafter referred to as "first optical input level") and controlling the level of the optical input into the first optical amplifier to be a predetermined value (hereinafter referred to as "first predetermined optical input level). Further, the optical amplifier may be an optical fiber amplifier with an optical fiber that is added a rare-earth element such as erbium doped fiber [EDF] as an amplifying medium or may be a semiconductor optical amplifier.

In the above mentioned configuration, the first predetermined optical input level is set such that a gain obtained when each of the first signal light is optically amplified by the first optical amplifier is a predetermined gain. Here, the gain of the predetermined value means a gain selected such that there is no reliance on wavelength by the gain of the optical amplifier. By controlling the optical input level such that the reliance is maintained, the wavelength reliance of the gain of the optical amplifier itself can be reduced. Therefore, the relative level of each signal light contained in the wavelength division multiplexed signal light after amplified can be maintained and uniformed. The appropriate gain can be maintained even if a change arises in the number of signal light due to a failure in a transmission path or an ADM node in the front part of the optical repeater.

In the above mentioned configuration, the first inputting level stabilizing circuit is provided with a first optical input level detection circuit for detecting a first optical input level, a first amplified light branching device for branching a part of a second amplified wavelength division multiplexed signal light and outputting first pseudo signal light, and a first branched and amplified light combining device for combining the first pseudo signal light with the first wavelength division multiplexed signal light and outputting first wavelength division multiplexed signal light after level control. The first optical input level detecting circuit is provided with a first inputted light branching device for branching a part of the first wavelength division multiplexed signal light and outputting the first branched wavelength division multiplexed signal light and the first light receiver for receiving the first branched wavelength division multiplexed signal light and outputting the first optical input level controlling signal.

The wavelength of a second signal light is set such that it is different from the wavelength of any signal light contained in the first wavelength division multiplexed signal light. That is to say, wavelengths of signal light used in the up and down lines are set different each other and, a part of the second signal light can be combined with the first wavelength division multiplexed signal light even if the branched light is a pseudo signal light. In this way, generation of noises due to the combination of the pseudo signal light with the proper signal light can be restrained. The pseudo signal light, after optically amplified by the optical amplifier, is removed by an optical filter disposed in the rear part of the light branching device for making the pseudo signal light as a pseudo signal light to the rear part of the optical amplifier or the up line (the other party's line) (hereinafter referred to as "pseudo signal light removing filter). Generation of noises can be prevented by the removal of the pseudo signal light by the optical filter.

In the former case, the optical repeater for transmitting wavelength division multiplexed signal light is superior in that the pseudo signal light need not to be combined to compensate for the optical input level in the optical repeater disposed in the rear part. Further, a pseudo signal light removing filter may be disposed in the front part of the light receiver in the final receiving terminal station. On the other hand, in the latter case, that is the case in which a pseudo signal light removing filter is disposed just behind the light amplifier, more precise optical output control is possible. The pseudo signal light is never sent to an optical repeater disposed in the rear part of the optical repeater.

The above description is based on the premise that the wavelengths of the first wavelength division multiplexed signal light and the second signal light are different each other. The optical repeater can be applied even if they are the same wavelength. In this case, a part of a naturally emitted light contained in the second signal light after amplified is split and is considered as a pseudo signal light. To describe it more concretely, a first amplified light branching device for branching the second signal light is set to branch light with a wavelength in naturally emitted light contained in the second signal light which is different from both the wavelength of the signal light contained in the first wavelength division multiplexed signal light and the wavelength of the second signal light and output the first pseudo signal light. Alternatively, the first amplified light branching device is set such that light with a wavelength in naturally emitted light contained in the second amplified signal light which is different from both the wavelength of the signal light contained in the first wavelength division multiplexed signal light and the wavelength of the second signal light is reflected and that the second signal light passes by the first light filter.

As another configuration of the first amplified light branching device, it may be configured of a first fiber grating and a first optical circulator. The first fiber grating outputs the second amplified signal light to the transmission path and reflects light with a wavelength in the naturally emitted light contained in the second signal light which is different from the wavelength of both the wavelength of the signal light contained in the first wavelength division multiplexed signal light and the second signal light. A first optical circulator is disposed between the second light amplifier and the first fiber grading and makes the second amplified signal light to pass through the first fiber grating and, at the same time, outputs light reflected by the first fiber grating to the branched and amplified light combining device as a pseudo signal light. In this case, since the fiber grating is used, a pseudo signal in the narrower wavelength band can be used.

An optical input level stabilizing circuit in accordance with the present invention is controlled such that the optical input level of the combined pseudo signal light and wavelength division multiplexed signal light takes the predetermined value and the controlling means can take the configurations described below. The above mentioned configuration can be realized when a first amplified light branching device is a light branching device capable of controlling the branching ratio of the first pseudo signal light to the second amplified wavelength division multiplexed signal light and the first optical input level stabilizing circuit has a first branching ratio controlling circuit for receiving the first optical input level controlling signal and controlling the branching ratio of the first pseudo signal light. Alternatively, the first optical input level stabilizing circuit may be further provided with a first variable light attenuator for controlling the attenuation amount of the first pseudo signal light and a first attenuation amount controlling circuit for controlling the attenuation amount of the first pseudo signal light upon receiving the first optical input level controlling signal. The first variable light attenuator may have a passing wavelength band in the vicinity of the wavelength of the second signal light and a central wavelength of the passing wavelength band may be varied according to the first optical input level controlling signal.

In the above mentioned configuration, generation of noises can be restrained by disposing a first optical filter for removing light with the same wavelength as that of the signal light contained in the first wavelength division multiplexed signal light from the first pseudo signal light and outputting the light in the first optical input level stabilizing circuit to prevent light with the same wavelength as that of the wavelength division multiplexed signal light from being combined.

The above mentioned configuration is for only the wavelength division multiplexed signal light in one way line, for example a down line, to compensate for the decrease of the optical input level due to a line failure by adjusting the optical input level or maintain a standard gain to prevent the wavelength reliance of a gain from fluctuating, but it goes without saying that this can be applied bi-directionally. That is to say, in the above configuration, the second signal light may be a second wavelength division multiplexed signal light to which the second signal light with wavelengths different each other is wavelength multiplexed and proceeding in the opposite direction of the first wave length division multiplexed signal light and, the second light amplifier may be provided with the second inputting level stabilizing circuit for detecting the optical input level of the second wavelength division multiplexed signal light (hereinafter referred to as "second optical input level") and controlling the level of light to be input to the second light amplifier such that it takes the predetermined value (hereinafter referred to as "second predetermined optical input level"). Here again, the second predetermined optical input level is set such that a gain obtained when each signal light is light amplified by the second light amplifier is a predetermined gain. In this way, the wavelength reliance of a gain can be prevented from changing and the variation of the number of signal light can be coped with.

An apparatus for transmitting wavelength division multiplexed signal light in accordance with the present invention uses the above mentioned optical repeater of the present invention and is provided with a first transmitter for sending first wavelength division multiplexed signal light, a first terminal station provided with a first receiver for receiving signal light, a second transmitter for sending a second signal light, a second terminal station provided with a second receiver for receiving signal light, a first signal light splitting circuit, disposed between the first terminal station and the second terminal station, for specifying a wavelength from the first wavelength division multiplexed signal light and selectively splitting the signal light, and a signal light add/drop node including a first signal light adding circuit for combining a signal light having a specific wavelength with the first wavelength division multiplexed signal light and sending it.

The above mentioned optical repeater of the present invention is disposed between the first terminal station and the second terminal station. The signal light add/drop circuit may be provided with a second signal light splitting circuit for specifying a wavelength not only from the first signal light but from the second wavelength division multiplexed signal light and selectively splitting the signal light and signal light add/drop node including the second signal light add/drop circuit for combining the signal light of the specific wavelength with the second wavelength division multiplexed signal light and sending it.

An optical repeater for transmitting wavelength division multiplexed signal light in accordance with the present invention can be applied to a light transmitting apparatus with a ring structure in which a center node and an ADM node are connected in a ring form. That is to say, the above mentioned center node in the light transmitting apparatus of the present invention is provided with the first transmitter for sending the first wavelength division multiplexed signal light to the first transmission path, a second transmitter for sending the second wavelength division multiplexed signal light to the second transmission path, the first receiver for receiving the wavelength division multiple signal light from the second transmission path and a second receiver for receiving signal light. The signal light add/drop node is provided with the first signal light splitting circuit, connected to the center node by the first transmission path, and the second transmission path, for specifying a wavelength from the first wavelength division multiplexed signal light and selectively splitting the signal light, the first signal light adding circuit for combining the signal light of the specific wavelength with the first wavelength division multiplexed signal light and sending it, a second signal light splitting circuit for specifying a wavelength from the second wavelength division multiplexed signal light and selectively splitting the signal light and a second signal light adding circuit for combining the signal light of the specific wavelength with the second wavelength division multiplexed signal light and sending it. One or more signal light add/drop nodes are disposed in the light transmitting apparatus of the present invention.

In the above mentioned basic configuration, the above mentioned optical repeaters for transmitting wavelength division multiplexed signal light are disposed between the center node and the signal light add/drop node or between the signal light add/drop nodes. In this case as well, a first pseudo signal light removing filter for removing light with the wavelength of the first pseudo signal light can be disposed in the front part of the second receiver and a second pseudo signal light removing filter for removing light with the wavelength of the second pseudo signal light in the front part of the first receiver.

The above and other objects, features and advantages of the present invention will become more apparent from the following detailed description when taken in conjunction with the accompanying drawings wherein:

Fig. 1 is a schematic illustration showing a configuration of a conventional apparatus for transmitting wavelength division multiplexed signal light;

Fig. 2 is a schematic illustration showing the situation in which a failure has occurred in a transmission path in the conventional apparatus for transmitting wavelength division multiplexed signal light shown in Fig. 1.;

Fig. 3 is a schematic illustration showing a status of light amplification in an optical relay amplifier used in the conventional apparatus for transmitting wavelength division multiplexed signal light, wherein (a) is a schematic illustration showing a status of light amplification during the normal operation, and (b) is a schematic illustration showing a status of light amplification in the case where a failure has occurred in a part of lines;

Fig. 4 is a schematic illustration showing a status of light amplification in an optical relay amplifier used in the conventional apparatus for transmitting wavelength division multiplexed signal light, wherein (a) is a schematic illustration of an optical input level, (b) is a schematic illustration of an optical input level, and (c) is a schematic illustration of an optical output level of $\lambda 4a$;

Fig. 5 is a schematic illustration showing the configuration of a first embodiment of an optical relay amplifier for transmitting wavelength division multiplexed signal light in accordance with the present invention;

Fig. 6 is a schematic illustration showing the configuration of an apparatus for transmitting wavelength division multiplexed signal light using an optical relay amplifier for transmitting wavelength division multiplexed signal light of a first embodiment of the present invention;

Fig. 7 is a schematic illustration showing a situation in which a failure has occurred in a transmission path in the apparatus for transmitting wavelength division multiplexed signal light of the present invention shown in Fig. 6;

Fig. 8 is a schematic illustration showing statuses of light amplification in the light replay amplifier of the first embodiment in the case where the failure has occurred as shown in Fig. 7, wherein (a) is a schematic illustration showing a status of light amplification during the normal operation, and (b) is a schematic illustration showing a status of light amplification in the case where a failure has occurred in a part of lines;

Fig. 9 is a schematic illustration showing optical input and output levels of the light amplifier before and after the failure shown in Fig. 7 has occurred, wherein (a) is a schematic illustration of an optical input level, (b) is a schematic illustration of an optical input level in the case where a pseudo signal light is combined, (c) is a schematic illustration of an optical output level, and (d) is a schematic illustration showing an optical output level of an amplified pseudo signal light;

Fig. 10 is a schematic illustration showing operations in the case where an optical input level to the light amplifier fluctuates in the first embodiment of the present invention, wherein (1) is a schematic illustration showing a status of light amplification during the normal operation and (2) is a schematic illustration showing statuses of light amplification by (a) a conventional optical relay amplifier and (b) an optical relay amplifier off the present invention respectively when the optical input and output levels are decreased;

Fig. 11 is a schematic illustration showing a configuration of an embodiment of the light branching device in the first embodiment of the optical relay amplifier of the present invention;

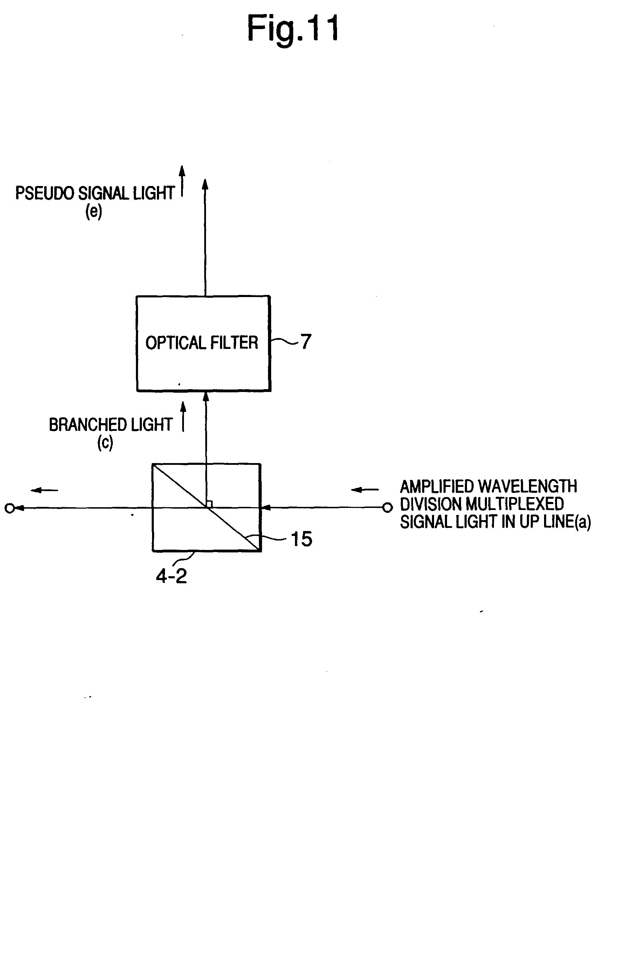

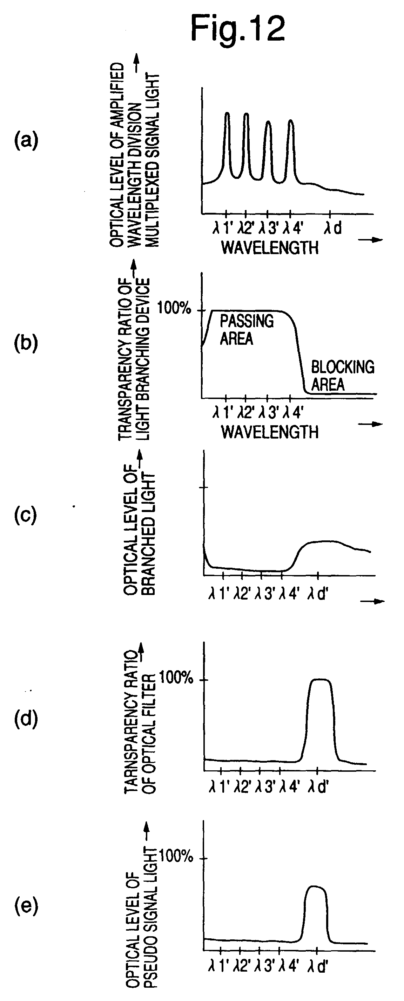

Fig. 12 is a schematic illustration showing a spectrum and wavelength characteristics of signal light of each portion in the case where the light branching device shown in Fig. 11 is used, wherein (a) is a schematic illustration showing a spectrum of wavelength division multiplexed signal light of an amplified up line (the other party's line), (b) is a schematic illustration showing wavelength characteristics of a multi-layer film filter used in the light branching device, (c) is a schematic illustration showing a spectrum of a branched light, (d) is a schematic illustration showing wavelength transparent characteristics of an optical filter, and (e) is a schematic illustration showing a spectrum of a pseudo signal light;

Fig. 13 is a schematic illustration showing the configuration of another embodiment of the light branching device in the first embodiment of the optical relay amplifier of the present invention;

Fig. 14 is a schematic illustration showing the spectrum and the wavelength characteristics of the signal light of each part in the case where the light branching device shown in Fig. 13 is used, wherein (a) is a schematic illustration showing the spectrum of the wavelength division multiplexed signal light of the amplified up line (the other party's line), (b) is a schematic illustration showing the wavelength transparent characteristics of a fiber grating, and (c) is a schematic illustration showing the spectrum of the pseudo signal;

Fig. 15 is a schematic illustration showing the configuration of a second embodiment of the optical relay amplifier for transmitting wavelength division multiplexed signal light in accordance with the present invention;

Fig. 16 is a schematic illustration showing the configuration of a third embodiment of the optical relay amplifier for transmitting wavelength division multiplexed signal light in accordance with the present invention;

Fig. 17 is a schematic illustration of the configuration of a fourth embodiment of the optical relay amplifier for transmitting wavelength division multiplexed signal light in accordance with the present invention;

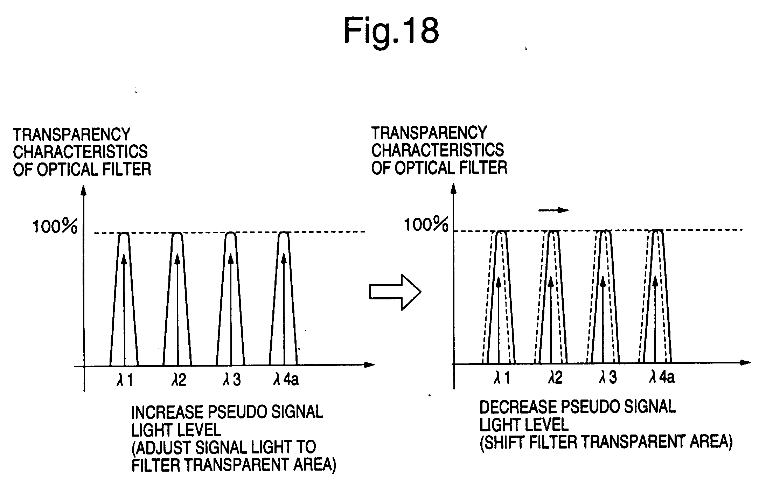

Fig. 18 is a schematic illustration of the status in which a passing wavelength band of the optical filter used in a fourth embodiment of the optical relay amplifier according to the present invention is changed; and

Fig. 19 is a schematic illustration showing the configuration of an apparatus for transmitting wavelength division multiplexed signal light in the ring form in which the optical relay amplifier for transmitting wavelength division multiplexed signal light in accordance with the present invention is used.

Before describing an optical relay amplifier for transmitting wavelength division multiplexed signal light in accordance with the present invention, a conventional optical relay amplifier is described for ease of understanding the present invention.

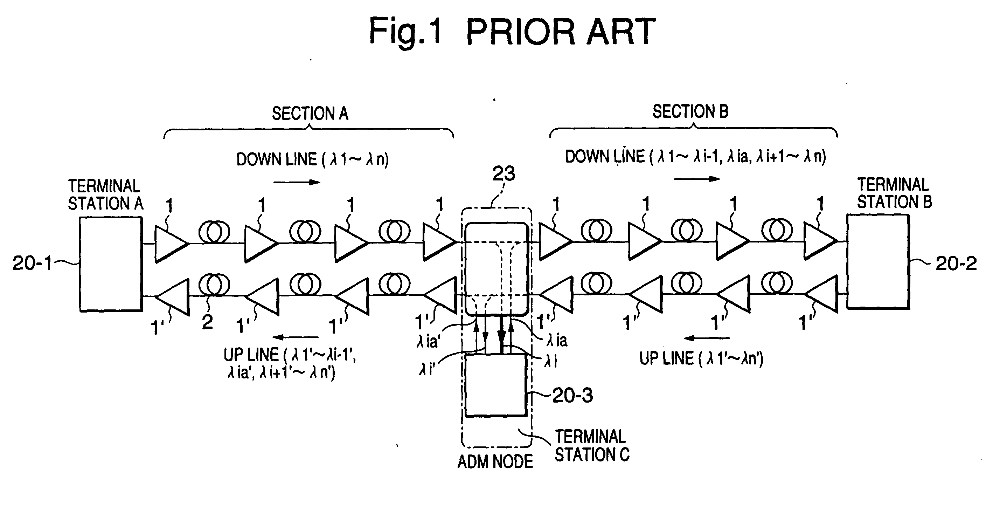

Fig. 1 illustrates an example of the configuration of an apparatus for transmitting wavelength division multiplexed signal light with a conventional ADM node. For ease of understanding, only one ADM node is disposed between a terminal station A and a terminal station B in the drawing, but a plurality of ADM nodes are usually disposed.

An apparatus for transmitting wavelength division multiplexed signal light shown in Fig. 1 has the configuration in which an ADM node 23 is disposed in the middle of a light transmission path connecting a terminal station A20-1 and a terminal station B20-2. The terminal station A20-1 and the ADM node 23 as well as the ADM node 23 and the terminal station B20-2 are linear relayed by n and m (wherein n and m are integral numbers) optical amplifiers respectively. The line over which signal light is transmitted from the terminal station A20-1 to the terminal station B20-2 is defined as a down line and a line over which signal light is transmitted from the terminal station B20-2 to the terminal station A20-1 is defined as an up line.

In the down line in Fig. 1, a signal light transmitting portion 21-1 of the terminal station A20-1 sends signal light $\lambda 1$ through $\lambda n$ with different wavelengths to a light transmission path 2 after wavelength multiplexing and optically multiplexing it by an optical relay amplifier 1. A wavelength division multiplexed signal light sent from the terminal station A20-1 is transmitted to the direction of the ADM node and the terminal station B with compensating for the decrease of the optical output level lost while propagating on the light transmitting route by n optical relay amplifiers 1 disposed with a predetermined span.

In the ADM node 23, a wavelength $\lambda i$ assigned to the ADM node among the wavelength division multiplexed signal light transmitted from the terminal station A is extracted and received and, the other wavelength signals (a WDM signal light passing through the ADM node is hereinafter referred to as "an ADM node passing signal light") pass through the ADM node as they are. The WDM signal light passed the ADM node are sent to the terminal station B in downstream. In the ADM node, a wavelength $\lambda ia$ (add signal light) assigned between the ADM node and the terminal station B is added by being wavelength multiplexed to the ADM node passing signal light (signal light wavelength multiplexed to the ADM passing signal light in this manner is hereinafter referred to as "an add signal light") and light transmission between the ADM node and the terminal station B is conducted. Note that, as to the up line, signal light is optically transmitted to the opposite direction as in the down line.

Since, an apparatus for transmitting wavelength division signal light with an ADM node can branch/add a specific (or arbitrary) wavelength signal in the ADM node without converting the signal into an electric signal in a relay, it is possible to build a transparent and flexible light wave network.

However, in the above mentioned conventional apparatus for transmitting wavelength division multiplexed light signal, there is a problem that degradation in the quality of transmission signals arises because level fluctuation of signal light operating normally is caused when several signal light among wavelength multiplexed signals is abruptly lacked in such cases as a broken line of a certain sections of the transmission path, a failure in signal light transmitting portion and so on.

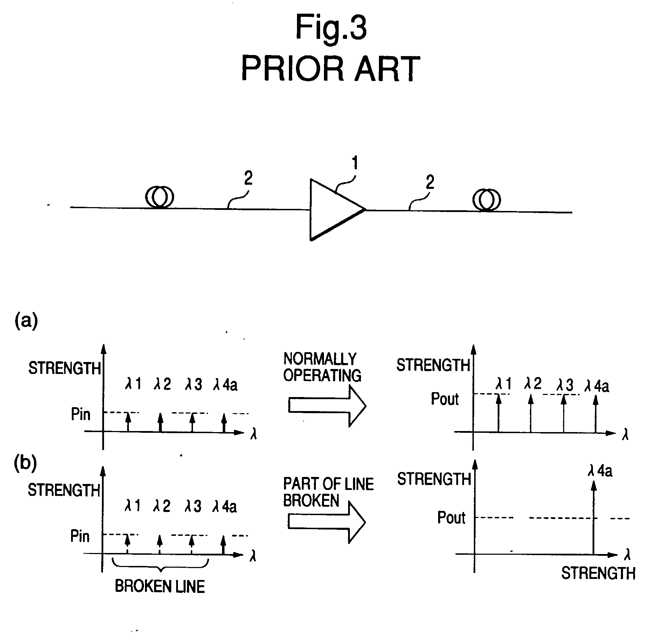

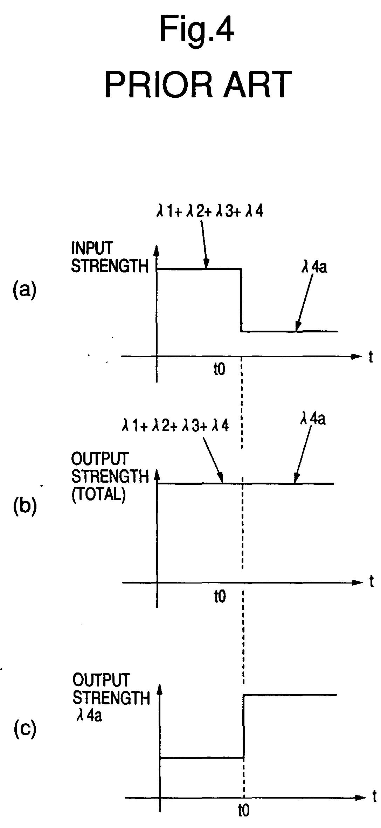

With respect to the above mentioned problem, for example, in the case where a broken line has arisen in the transmission path between-the terminal station A and the ADM node (section A), the operation of a signal wavelength $\lambda i$ existing between the ADM node and the terminal station B (section B) is now explained with reference to Fig. 3 and Fig. 4.

Fig. 3 is a schematic illustration showing a status of light amplification in an optical relay amplifier used in the conventional apparatus for transmitting wavelength division multiplexed signal light. Fig. 4 is a schematic illustration showing a status of light amplification in an optical relay amplifier used in the conventional apparatus for transmitting wavelength division multiplexed signal light.

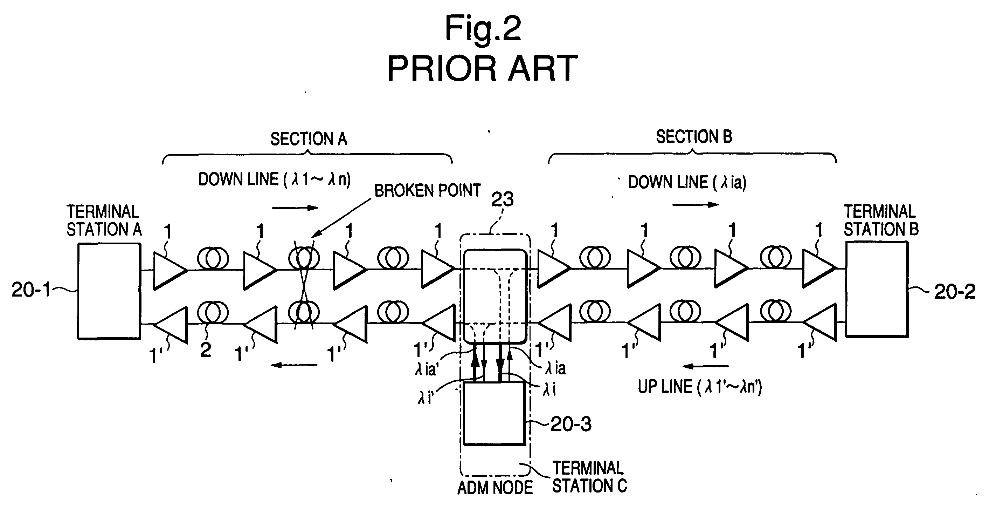

When attention is paid on the section B in the configuration shown in Fig. 1, total n signal wavelengths consisting of n-1 signal light of the terminal station A excluding the wavelength $\lambda i$ split in the ADM node and signal light with the wavelength $\lambda ia$ added in the ADM node are linearly relayed in the section B before the broken line in the section A(see Fig.3(a) and Fig.4(a)). When the signal wavelengths of the terminal station A is lacked due to the broken line occurs in the section A (see Fig. 2), only the signal wavelength $\lambda ia$ from the ADM node exists in the section B.

In the case where a light amplifier with a constant optical outputting control is used as a light amplifier, when the number of the signal wavelengths in the section B abruptly changes from n (n=4 here) to one as shown in Fig. 3(b), output for one wavelength of the light amplifier becomes more than a desired level of output. For example, when n=4, the number of wavelengths decreases from the original 4 to 1/4 of the original, the remaining one wavelength of light output increases approximately by 6dB(see Fig.4(b)). Then, there is a possibility that degradation in the quality of signal light arises due to the influence of non-linear effect and so on arising in the transmission path by the increase of the optical output level(see Fig.4(c)).

In the conventional apparatus for transmitting wavelength division multiplexed signal light, an optical amplifier with a constant optical outputting control is used as an optical repeater in many cases due to the simplicity of line design, the simplicity of controlling the optical amplifier and so on, and there is a high possibility of degrading a transmission quality due to the above mentioned phenomenon. In addition, since a gain flat characteristics (wavelength characteristics of a gain) of the optical amplifier with a constant optical outputting control relies on an optical input level as well, the fluctuation of the input level causes degradation with respect to the gain flat characteristics. The degradation of the gain flat characteristics can be a factor for causing dispersion among signal levels.

Due to the above mentioned reasons, signal light with a large optical input level causes characteristic degradation by the non-linear optical effect arising in the transmission path and signal light with a small optical input level causes characteristic degradation by the S/N degradation.

An optical repeater for transmitting wavelength division multiplexed signal light in accordance with the present invention is now described.

An optical repeater in accordance with the present invention is planned to be applied to an ADM node and so on, and is used in a wavelength division multiplexed (WDM) transmission apparatus for conducting a linear relay signal light transmission into which a wavelength division multiplexed signal light to which a plurality of signal light with different wavelengths each other (signal wavelength $\lambda n$: n=1 through n, wherein n is an integer equal to or grater than one) are wavelength multiplexed is input. The optical relay apparatus of the present invention is used for di-directional wavelength multiplexed optical transmission via one or more optical transmission paths (up and/or down line) wherein signal light is transmitted bi-directionally.

An optical repeater in accordance with the present invention is basically provided with an optical amplifier for optically amplifying wavelength division multiplexed signal light and an optical output controlling circuit for controlling the light output to a constant level in a bi-directional wavelength division multiplexed signal light transmission. When an optical input level to be input to one of the light amplifiers has been detected and the level has fluctuated from the predetermined value, a part of amplified signal light output from the other party's light amplifier is branched and adjusted with the predetermined optical input level and then combined to be the inputting light to obtain the original light level.

The predetermined optical input level is set such that a gain obtained when each signal light is optically amplified by the optical amplifier becomes a predetermined gain and, in particular, the level of each signal light is uniformed and a stabilized light amplification can be conducted by selecting a gain of the optical amplifier which independent on wavelength even if a level fluctuates. It can prevent an extraordinary gain from being applied to the remaining signal light because, even if a certain signal light among the wavelength multiplexed signal light is abruptly broken, the optical input level is compensated.

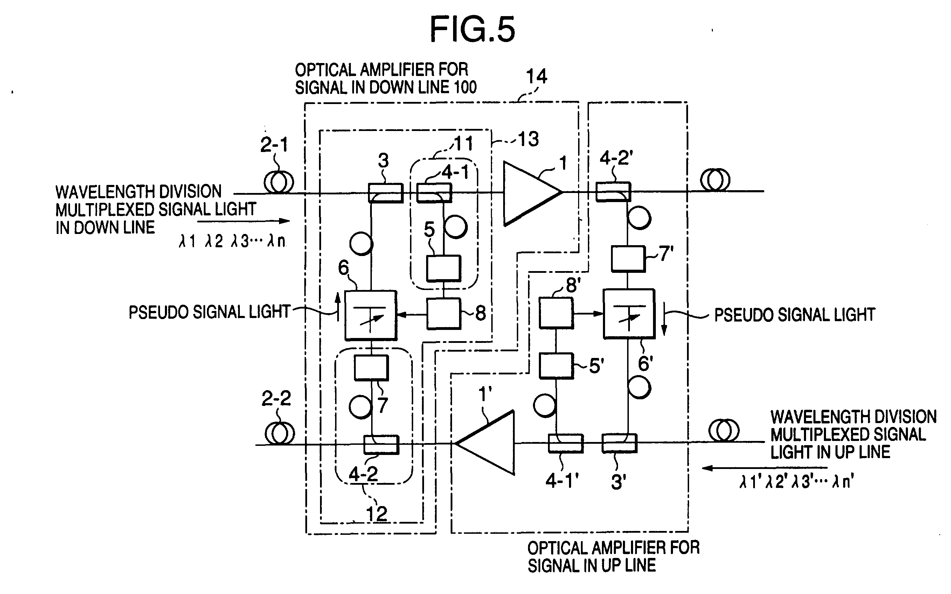

An optical repeater in accordance with the present invention is for adjusting an optical input level by using a part of the other party's amplified signal light as described above, but it goes without saying that the configuration may be applied to only one of the parties or may be applied to both parties in a bi-directional optical transmission. An optical repeater for transmitting wavelength division multiplexed signal light and an apparatus for transmitting signal light using the same are hereinafter described in detail with reference to Fig. 5, in the case where the above mentioned configurations are applied to both the amplifier and the apparatus.

Fig. 5 is a schematic illustration showing the configuration of a first embodiment of an optical repeater for transmitting wavelength division multiplexed signal light in accordance with the present invention. An optical repeater in accordance with the present invention is provided with an optical amplifier for a down line signal 100 for optically amplifying signal light transmitted over the down line and an optical amplifier for an up line signal 100' as shown in Fig. 5. Since optical amplifiers for each of the up and down lines has a similar configuration, the configuration of the optical amplifier for the down line signal 100 is now described.

The optical amplifier 100 consists of an optical amplifier 1 for conducting optical amplification and an optical input level stabilizing circuit 13 for stabilizing the input level of the optical amplifier 1. The optical amplifier 1 is provided with a light output controlling circuit (not shown) for conducting light output control such that an optical output level is maintained at a predetermined constant level.

The optical output level of an optically amplified signal light output from the optical amplifier 1 (hereinafter referred to as "an amplified signal light (a first amplified signal light)" is controlled to be constant by the optical output controlling circuit. Therefore, if an optical input level is controlled to a predetermined level, even if, for example, a certain wavelength of signal light among wavelength multiplexed signal light to be inputted is broken, the original optical amplification status can be maintained by compensating for the broken signal light by a pseudo signal light. When the optical input level of the entire wavelength division multiplexed signal light has changed, a gain of the optical amplifier 1 can be constant by increasing or decreasing the pseudo signal light in order to compensate for the change. In this way, the change of a gain's reliance on wavelength can be prevented and the optical output level between each signal light can be maintained constantly.

Here, the optical repeater in accordance with the present invention takes out by the input level stabilizing circuit 13 a part of the signal light optically amplified by an optical amplifier 1' of an opposite line (hereinafter referred to as "an amplified signal light (a second amplified signal light)" in the opposite line (the up line) and controls and stabilizes the optical input level by combining the branched signal light (hereinafter referred to as "a pseudo signal light (a dummy signal light)" to a wavelength division multiplexed signal light and inputting it to the optical amplifier 1.

In order to perform this function, the input level stabilizing circuit 13 of this embodiment roughly consists of an optical input level detecting circuit 11 for detecting an input level of an input wavelength division multiplexed signal light in the down line, a pseudo signal light source for supplying a pseudo signal light to be added to the wavelength division multiplexed signal light, and a pseudo signal light level controlling portion for controlling the level of the pseudo signal light depending on the optical input level detected by the optical input level detecting circuit 11.

The optical input level detecting circuit 11 is provided with a light branching device 4-1 for branching a part of the wavelength division multiplexed signal light and a light receiver 5 for detecting the level of the branched signal light. The pseudo signal light source consists of a light branching device 4-2 for branching a part of the amplified signal light of the opposite line, that is the up line in the case of the down line and an optical filter 7 for removing signal light components of the up line out of the branched amplified signal light that is branched by the light branching device. The optical filter 7 is provided in order to remove the signal light in the up line with the same wavelength as that of the signal light in the down line because they become noises when combined to the down line.

The optical input level stabilizing circuit 13 sets the level of a pseudo signal light to be combined depending on the optical input level of the input wavelength division multiplexed signal light detected by the above mentioned light receiver 5. The stabilizing circuit 13 consists of an attenuation amount control circuit 8 for sending a control signal based on the optical input level, a variable light attenuator 6 and a light combining device 3 for combining a pseudo signal light having a predetermined light level set by the variable light attenuator 6 to the wavelength division multiplexed signal light. As mentioned above, the optical amplifier for an up line signal 100' is also provided with the same configuration.

Operations are now described for the first embodiment of the optical repeater in accordance with the present invention. In describing the operations of the first embodiment in accordance with the present invention, an apparatus for transmitting wavelength division multiplexed signal light to which the optical repeater in accordance with the present invention is applied is described first.

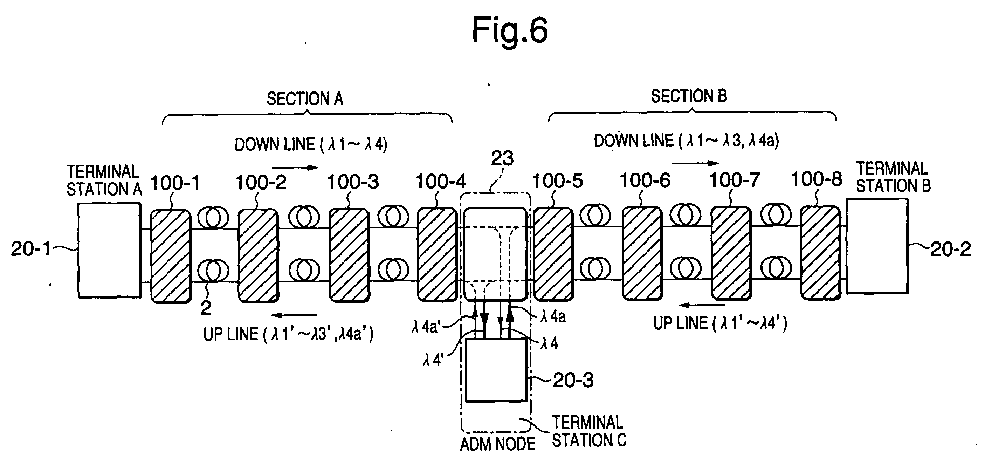

Fig. 6 shows the configuration of the apparatus for transmitting wavelength division multiplexed signal light using the optical repeater of the first embodiment in accordance with the present invention. Basically, the apparatus for transmitting wavelength division multiplexed signal light consists of a terminal station A (first terminal station) 20-1 provided with a transmitter (not shown) for sending a wavelength division multiplexed signal light transmitted through the down line and a receiver (not shown) for receiving the wavelength division multiplexed signal light received through the up line, a terminal station B (second terminal station) 20-2 disposed opposite the terminal station A and a terminal station C 20-3 provided with an ADM node disposed between the terminal stations A and B. In place of the optical repeater comprising an ordinary optical amplifier, that is the optical amplifier 1 for controlling the input WDM signal light to be constantly output and optically amplify it disposed between the terminal stations in the conventional optical transmission apparatus described in the prior art section (see Fig. 2), the optical repeaters 100-1 through 100-8 are disposed in the apparatus for transmitting wavelength division multiplexed signal light of the first embodiment in accordance with the present invention. The optical repeaters 100-1 and so on are provided with the optical amplifiers 100 (and 100') shown in Fig. 5.

In this embodiment, the signal wavelengths $\lambda 1$ through $\lambda n$ of the down line are set in a different wavelength from the signal wavelength of the up line. That is to say, the wavelength of a wavelength division multiplexed signal light to be sent from the terminal station A 20-1 to the down line in advance and the wavelength of each signal light contained in the wavelength division multiplexed signal light to be sent from the terminal station B20-2 are set in different wavelengths respectively. For ease of description, it is assumed here that, with the number of wavelength multiplex of the entire apparatus being 4 and the number of ADM nodes and the number of Add/Drop wavelengths in the ADM node being 1 respectively, four waves are selected with equal intervals for the signal wavelength $\lambda i$ of the down line and the wavelength of each signal light of the up line is set as $\lambda i' = \lambda i + \Delta \lambda$ (i=1 through 4, $\Delta \lambda$=the wavelength interval of the up line/2). Further, the relationship between the wavelength division multiplexed signal light of the up line and that of the down line is not limited to the above mentioned relationship but may be the relationship in which the wavelength bands do not cross and such relationship can be applied even if the wavelength are totally the same.

In the configuration shown in Fig. 6, operations of light amplification are now described with focusing on down line signals of an optical amplifier 100-5 disposed in the section B.

The case in which there is no broken line and the level to be input in the optical amplifier 100-5 is normal is discussed first. In this case, $\lambda 1$ through $\lambda 3$ (the signal light of the terminal station A20-1) and $\lambda 4a$ (the Add signal of the ADM node) exist in the down line (the down line input of the optical amplifier 100-5) of the section B and $\lambda 1'$ through $\lambda 4'$ (the signal light of the terminal station B 20-2) exist in the up line of the section B. Signal light to be input to the optical amplifier 100-5 has four waves in both the down and up lines and the ordinary optical input level is input in the optical amplifier 100-5.

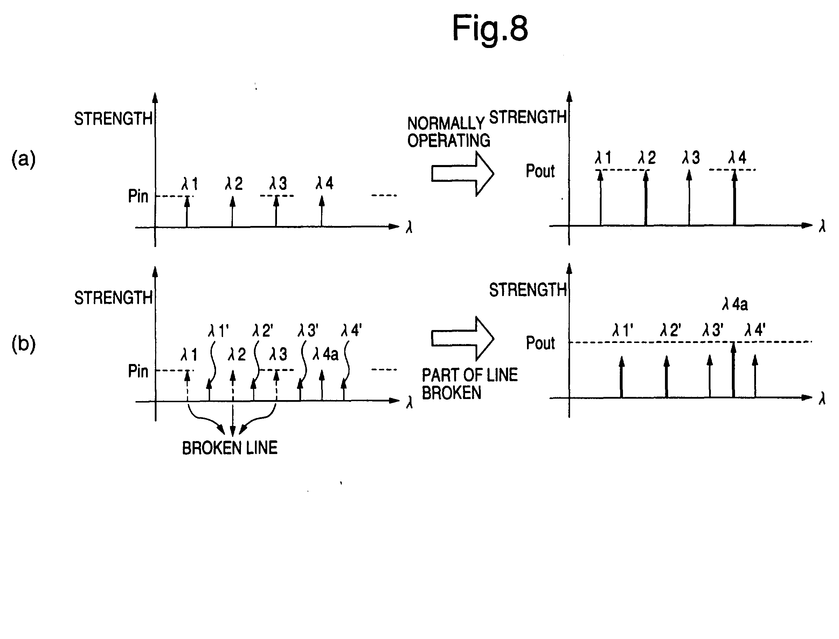

In the attenuation amount control circuit 8 shown in Fig. 5, the combination of the pseudo signal light branched by the light branching device 4-2 (the amplified wavelength division multiplexed signal light on the up line) to the down line is prevented by setting the attenuation amount of the variable light attenuator 6 as infinite $\infty$ based on the information of the input level monitor obtained in the input light level detecting circuit 11. Therefore, in the normal case in which there is no broken line in the transmission path, the optical amplifier 100-5 conducts the same operation as that of the conventional optical amplifier 1. This status is shown in Fig. 8 (a).

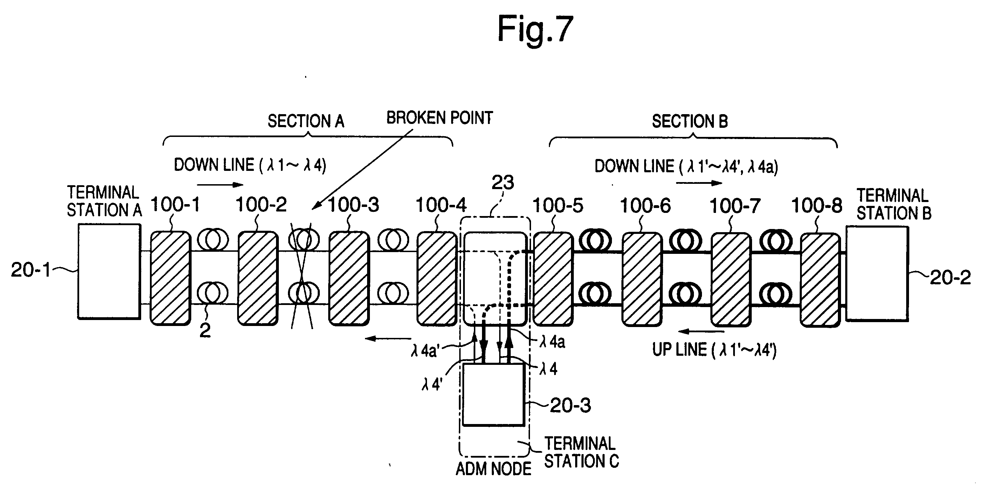

Next, the case in which the transmission path of the section A in Fig. 6 has been broken between the optical amplifier 100-2 and the optical amplifier 100-3 as shown in Fig. 7 is discussed. It is desirable that, even if such a incident has occurred, the transmission between the ADM node and the terminal station B is conducted normally regardless the broken line in the section A. As to the input to the down line of the optical amplifier 100-5, the signal $\lambda 1$ through $\lambda 3$ of the terminal station A are broken and only $\lambda 4a$ sent from the ADM node exists. On the other hand, concerning the up line input of the optical amplifier 100-5, since the broken point is located downstream of the section B, the input of the up line has four waves of $\lambda 1'$ through $\lambda 4'$ as usual (the signal light of the terminal station B20-2).

The attenuation amount control circuit 8 connected to the down line promptly detects the decrease of the input signal due to a broken line in the section A by the input level monitor 11. At the same time, the attenuation amount control circuit 8 controls the attenuation amount of the variable light attenuator 6 such that the input light level of the optical amplifier 1 is the same as the level at the normal operation (four waves) (in this case, by decreasing the attenuation amount from the initial status) and combines the amplified wavelength division multiplexed signal light (pseudo signal light) of the up line branched by the light branching device 4-2 to the wavelength division multiplexed signal light of the down line by the light combining device 3. Here, since the wavelength of each signal light of the up line is the wavelength shifted by $\Delta \lambda$ from the signal wavelength of each signal light in the down line, any of the wavelengths of the signal light input to the optical amplifier 1 of the down line do not cross as shown in Fig. 8 (b) and the original optical input level is compensated. As a result, when focusing on the signal wavelength of $\lambda 4a$ only, an increase in the optical level can be restrained as shown in Fig. 8 (b).

The pseudo signal light branched from the up line that has been combined to restrain the level increase of $\lambda 4a$ is different from the wavelength of signal light of the down line. Due to this fact, the pseudo signal light can be easily removed by disposing an optical filter and the like for removing pseudo signal light at the output end of the optical repeater or the optical repeater in the rear part or the receiver of the terminal station. This hardly affects the quality degradation of signals of λ4a.

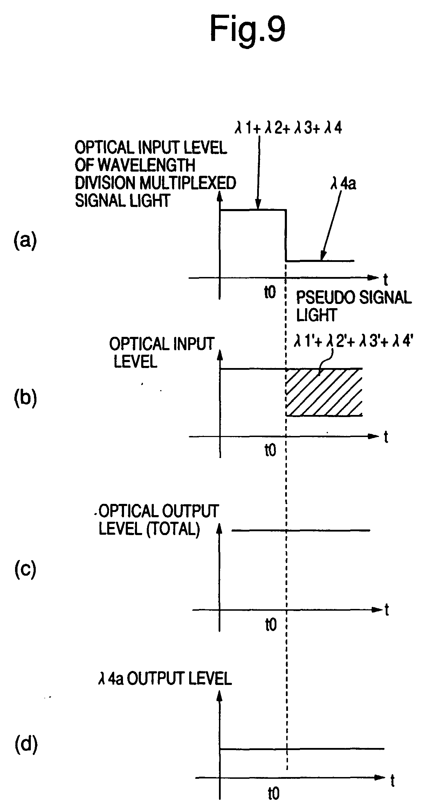

The above-discussion is now described from the view point of the input and output levels with reference to Fig. 9.

Fig. 9 shows the optical input output levels of the optical amplifier before and after the failure shown in Fig. 7 has arisen, where (a) shows the optical input level, (b) shows the optical input level when the pseudo signal light has been combined, (c) shows the light output level and (d) shows the light output level of the amplified pseudo signal light. (a) shows the variation of the optical input level to the optical amplifier 1 in the case in which it is assumed that a broken line has occurred in the wavelength division multiplexed signal light due to a line failure at the time t=0 and a pseudo signal light is not combined. The wavelength division multiplexed signal light that has maintained a constant level experiences the decrease in the overall optical input level, due to the broken line occurred at the time instance t=0, with only the signal light λ4a added in the ADM node 20-3 disposed downstream of the part where the line failure occurred due to the broken line being output.

Fig. 9 (b) shows the status in which a part of the wavelength division multiplexed signal light (λ1' through λ4') of the up line (the other party's line) are branched and are combined with this as a pseudo signal light. By this combination of the pseudo signal light, the optical input level returns to the status before the line failure has occurred. In this way, the level of light output from the optical amplifier 1 is maintained constant as shown in (c). (d) focuses on the signal light of the wavelength λ4a and shows the status in which the optical output level of λ4a is maintained at the status in which it should essentially be optically amplified.

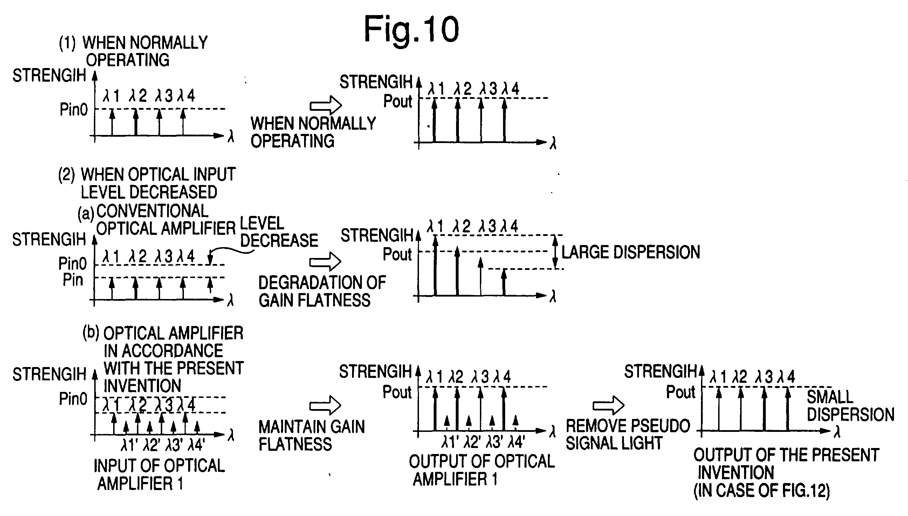

Description is now made on the case in which the optical input level of the entire wavelength division multiplexed signal light is fluctuated with reference to Fig. 10. Such a fluctuation can be occurred resulting from a failure in a transmission path and a characteristic fluctuation of a transmitter of a terminal station.

Fig. 10 shows operations when the optical input level to the optical amplifier has fluctuated in the first embodiment of the present invention, where (1) shows the status of optical amplification at the time of normal operation, (2) (a) shows the status of optical amplification by the conventional optical repeater and (b) shows the status of optical amplification by the optical relay amplification in accordance with the present invention both when the optical input level decreases.

(a) shows the status of optical amplification in optical amplifier 1 at the time of usual operation (normal time), where a wavelength division multiplexed signal light optically amplified with a predetermined gain with respect to the predetermined optical input level Pin0 and optically amplified to a predetermined optical output level is output. In this status, since the optical repeater is applied constant control of optical output, a predetermined optical output level Pout is set and a standard gain for obtaining this optical output level is set. Normally, the standard gain is set such that the optical output level of each signal light contained in the wavelength division multiplexed signal light is substantially uniform. Alternatively, even in the case in which the gain of the optical amplifier 1 is wavelength reliant, the standard gain is set as a gain that is uniformed by a gain equalization device (not shown). The optical input level for being such standard gain is calculated as Pin0.

Note that, since the above mentioned optical output level varies depending on the number of signal light contained in the wavelength division multiplexed signal light (substantially proportional to the number of signal light), it is possible to transmit a reasonable predetermined optical output level to each optical repeater from outside, for example, by adding information giving the number of signal light to the wavelength division multiplexed signal light.

However, assuming that the optical input level of the entire wavelength division multiplexed signal light has decreased (decreased from Pin0 to Pin), since the optical output level of the entire wavelength division multiplexed signal light output from the optical amplifier 1 is controlled to be maintained constant, gains of the optical amplifier 1 fluctuates as a result. Then, since the wavelength reliance of a gain of the optical amplifier usually varies depending on the change of the gain itself, gains to each signal light are optically amplified differently. (a) shows the case of the conventional optical repeater, where large differences in optical output levels arise between each signal light. To the contrary, in the optical repeater in accordance with the present invention shown in (b), since the optical input level is maintained in the original status and optically amplified with the addition of pseudo signal light (λ1' through λ4'), dispersion of the optical output levels of each signal light can be prevented from arising.

A configuration of a light branching device in the first embodiment of the optical repeater in accordance with the present invention is now described.

Fig. 11 shows a configuration of an embodiment of a light branching device in the first embodiment of the optical repeater in accordance with the present invention. A wavelength division multiplexed signal light (second wavelength division multiplexed signal light) output from an optical amplifier 1' for the up line is partly branched by a light branching device 4-2 disposed in a transmission path. A device using a dielectric multi-layer film optical filter 15, for example, can be applied to the optical branching device 4-2. As described above, if each signal light contained in the wavelength division multiplexed signal light is branched without exception, it would be sufficient to use a half mirror (provided that the usual branching ratio is 10:1 or less) whose transparency to the wavelength and reflection characteristics are flat. Further, when a part of the wavelength division multiplexed signal light of the up line is used, there is an advantage that a compensation of the optical input level of the wavelength division multiplexed signal light of the down line is possible over a relatively large area because the strength of the signal light itself is high. However, the application is difficult when signal light wavelengths are the same in up and down lines.

To the contrary, if naturally emitted light contained in the signal light of the up line is used, it would be sufficient to use a light branching device using an optical filter for passing light in the wavelength band of the amplified wavelength division multiplexed signal light and reflecting light in other wavelength bands. This configuration is effective when signal light wavelengths are the same in up and down lines, but it is not appropriate for the compensation for larger input levels because the naturally emitted light level is small. In accordance with this configuration, there is also an advantage that naturally emitted light is removed from the wavelength division multiplexed signal light of the up line and that a pseudo signal light is branched.

Fig. 12 shows a spectrum and wavelength characteristics of signal light of each part when the naturally emitted light is used as a pseudo signal light by the light branching device shown in Fig. 11, where (a) shows a spectrum of the amplified wavelength division multiplexed signal light of the up line (the other party's line), (b) shows wavelength characteristics of a dielectric multi-layer film optical filter used in the light branching device 18,(c) shows a spectrum of the branched light, (d) shows wavelength transparent characteristics of the optical filter, and (e) shows a spectrum of a pseudo signal light.

Assuming that the optical filter used in the light branching device 4-2 has transparent characteristics in the wavelength band having the wavelength division multiplexed signal light as shown in (b) and has blocking area in other bands, all the wavelength division multiplexed signal light in the transparent wavelength band passed through this light branching device and is sent to the transmission path. On the other hand, signals of the wavelength in the blocking area, that is the majority of the naturally emitted light, are branched by the light branching device 4-2 and the branched light has the spectrum as shown in (c). (d) shows the wavelength transparent characteristics of the optical filter 7 disposed in the branch side of the light branching device 4-2 in Fig. 11 and is the characteristics of a band pass filter for passing only light in the vicinity of the wavelength λd that should be pseudo signal light. Then, the light having passed through the optical filter 7 is eventually become pseudo signal light having the spectrum shown in (e).

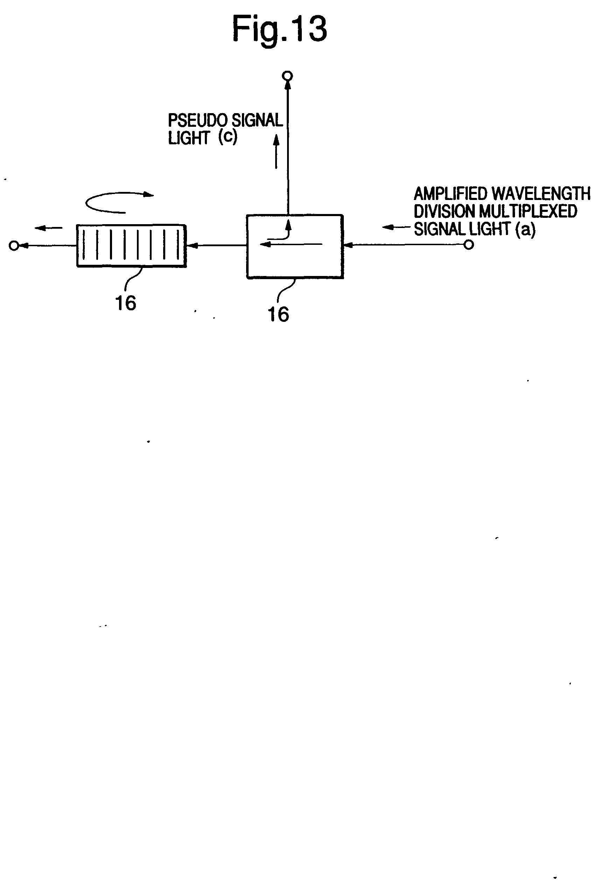

Fig. 13 shows the configuration of another embodiment for branching a pseudo signal light from the wavelength division multiplexed signal light of the up line. Whereas a dielectric multi-layer film optical filter is used in the embodiment shown in Fig. 12, this embodiment consists of a fiber grating 17 for reflecting light of the wavelength to be pseudo signal light and an optical circulator 16 disposed in the front part (the optical amplifier 1) side. The amplified wavelength division multiplexed signal light of the up line output from the optical amplifier 1' passes through the optical circulator 16 to the transmission path. In addition, the wavelength division multiplexed signal light goes straight to pass through the fiber grating 17 and is sent to the transmission path. On the other hand, light of the wavelength λd that should be a pseudo signal light is reflected in the fiber grating 17 and proceeds to the opposite direction to be input to the optical circulator 16 and is output as pseudo signal light from the output end in the upper side of the drawing.

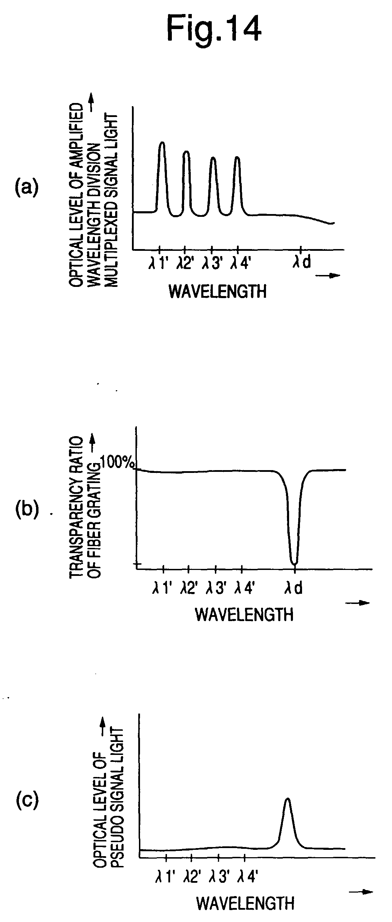

Fig. 14 shows a spectrum and wavelength characteristics of signal light of each part when the light branching device shown in Fig. 13 is used, where (a) shows a spectrum of the amplified wavelength division multiplexed signal light of the up line (the other party's line), (b) shows wavelength transparent characteristics of the fiber grating and (c) shows a spectrum of the pseudo signal light. Since (b) reflects only light of wavelength λd with the wavelength transparent characteristics of the fiber grating, only the light with wavelength λd are taken out of the light shown in (a) (see (c)), which become pseudo signal light.

A second and a third embodiments of the optical repeater in accordance with the present invention are now described.

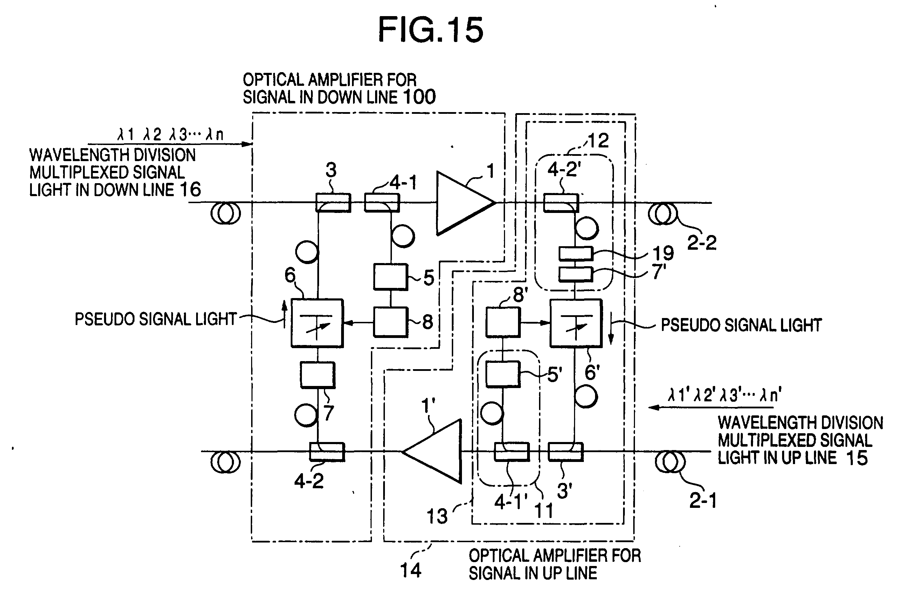

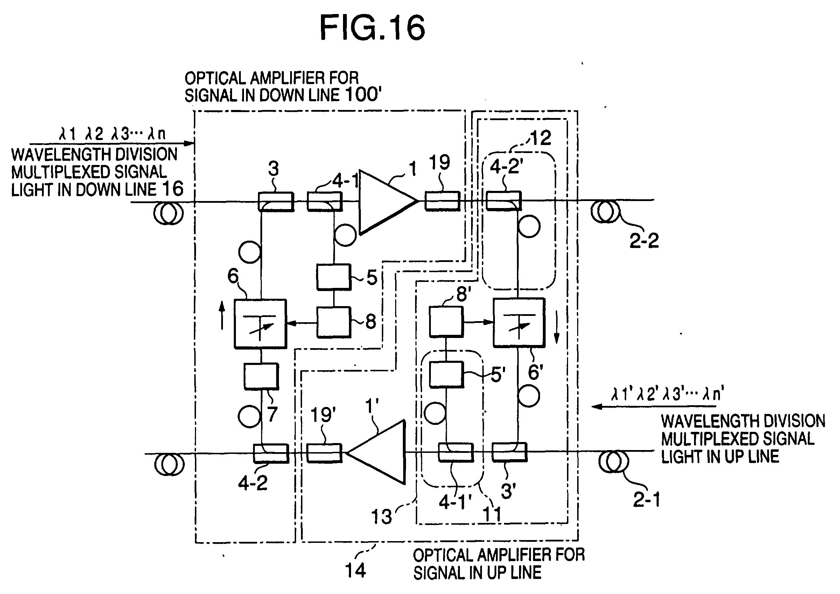

Their basic configurations are the same as that of the first embodiment, but the embodiments are different in that they are provided with a pseudo signal light removing optical filter for removing pseudo signal light contained in the amplified wavelength division multiplexed signal light output from the optical amplifier. The pseudo signal light removing filter may be disposed in the branch side of the light branching device 4-2 for branching the wavelength division multiplexed signal light output from the optical amplifier 1 as shown in Fig. 15 as a pseudo signal light for compensating for the signal light of the up line. As shown in Fig. 16, it may also be disposed just behind the optical amplifier 1.

The former case is superior in that it erases the necessity for compensating for the optical input level by combining the pseudo signal light again in an optical repeater disposed in the rear part. The pseudo signal light removing filter may be disposed in the front part of the light receiver in the final receiving terminal station. On the other hand, in the latter case, that is the case in which the pseudo signal light removing filter is disposed just behind the optical amplifier, more precise optical output control becomes possible. By disposing the light filter or the like, a pseudo signal light is never sent to an optical repeater disposed in the rear part of the optical repeater.

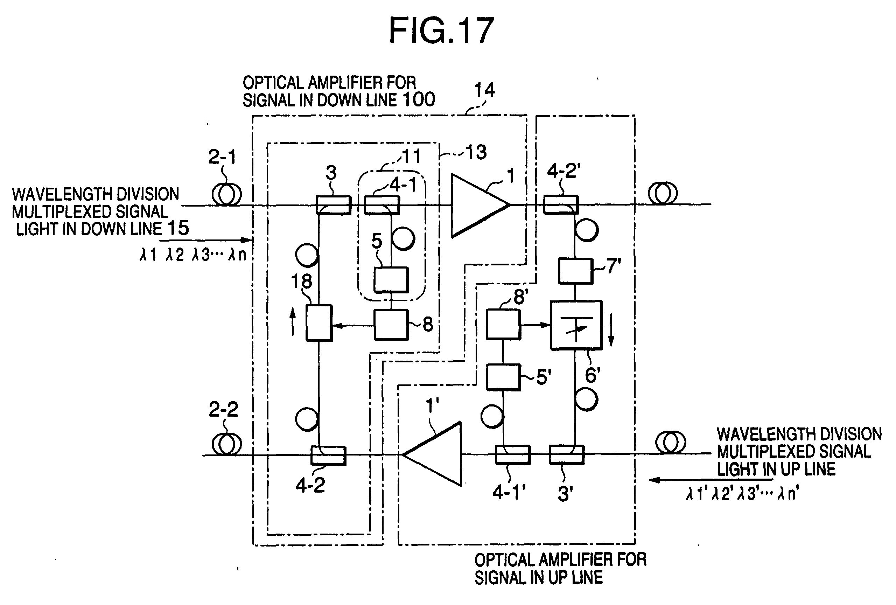

Fig. 17 shows a configuration of the fourth embodiment of the optical repeater in accordance with the present invention, which is different from the first embodiment in that, whereas the configuration with the combination of a variable light attenuator and an optical filter 7 for removing light of wavelength other than the wavelength of the wavelength division multiplexed signal light of the down line is applied to the first embodiment shown in Fig. 5, in this embodiment, an optical filter capable of variably controlling the passing wavelength band in the vicinity of the wavelength of each signal light of the wavelength division multiplexed signal light of the up line (the other party's line) is used in place of the above mentioned combination. As a wavelength variable type optical filter 18, there is an optical filter of the Fabri Pero type whose resonator's length is subtly adjustable. When the free spectrum range (FSR) of this filter is set equally with the interval of the signal wavelength, by subtly adjusting the resonator, the transparent band of the filter can be adjusted and the transparent amount of the pseudo signal light can be adjusted as shown in Fig. 15. As a result, the optical repeater can be given the same function as those of the above mentioned embodiments and similar effects can be attained.

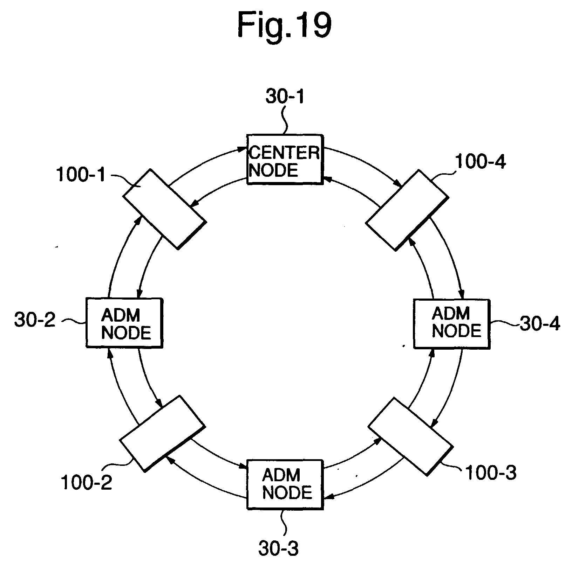

Although, in the optical repeater for transmitting wavelength division multiplexed signal light and the apparatus for transmitting signal light have been described as having a terminal station A disposed on one end and a terminal station B disposed on the other end, and the optical repeater is disposed between them as shown in Fig. 6, the form of the apparatus for transmitting signal light is not limited to this. For example, as shown in Fig. 19, the apparatus for transmitting signal light with a center node and one or more signal light add/drop nodes are connected in the ring shape and an optical repeater is disposed between the nodes can be applied.

Further, the above mentioned amplifier may be an optical fiber amplifier with an optical fiber that is added a rare-earth element such as erbium doped optical fiber as an amplifying medium or may be a semiconductor optical amplifier. The number of signal light to be wavelength multiplexed is not limited to four but can take any number equal to or grater than one, and one may have only one signal light and the other is a wavelength division multiplexed signal light in which a plurality of signal light is wavelength multiplexed.

As described above, the optical repeater for transmitting wavelength division multiplexed signal light of the present invention can maintain the input level and output level of the optical amplifier 1 constantly because it adjusts the level of a branched light of the opposite line and combines it to the wavelength division multiplexed signal light as a pseudo signal light even if signal levels of several of the wavelength division multiplexed signal light have been decreased due to some reasons. In this way, the gain of the optical amplifier can be always maintained constant and stable optical amplification is possible without changing the deviation of gains between signals. By shifting the wavelength of a wavelength division multiplexed signal light of the down line to be a pseudo signal line from a wavelength division multiplexed signal light of the up line, the signals of each line can be separated by an optical filter and the like and also has an effect that degradation of signals due to a coherent cross stroke is not caused. Since opposite lines are utilized as pseudo signal light sources, it is not necessary to prepare a new light source (such as LD) as a pseudo signal light. As a result, stable WDM transmission that is hardly influenced by a broken line of other signal light and decrease of levels is possible and reliability of the apparatus is improved.

Since the gain flatness degree of the optical amplifier 1 with a constant optical outputting control has characteristics to vary depending on the level of incidence to the optical amplifier 1, the conventional optical amplifier 1 also has a problem that decrease of the input level results in degradation of the wavelength flatness degree and enlarges the level deviation among signals. On the other hand, with the optical amplifier in accordance with the present invention, since the input level of the optical amplifier can be stabilized, variations of the gain flatness degree can be restrained and, as a result, the level deviation among signals can also be stabilized.

While this invention has been described in connection with certain preferred embodiments, it is to be understood that the subject matter encompassed by way of this invention is not to be limited to those specific embodiments. On the contrary, it is intended for the subject matter of the invention to include all alternatives, modifications and equivalents as can be included within the spirit and scope of the following claims.

**Claims**

1. An optical repeater for transmitting wavelength division multiplexed signal light comprising:

   a first optical amplifier for optically amplifying a first wavelength division multiplexed signal light to which first signal light having wavelengths different from each other is wavelength multiplexed and for outputting first amplified wavelength division multiplexed signal light;
   a first optical output control circuit for controlling said first amplified wavelength division multiplexed signal light to a predetermined value of optical output level (hereinafter referred to as "first predetermined optical output level"); and
   a second optical amplifier for optically amplifying a second signal light and outputting a second amplified signal light,
   wherein said first optical amplifier comprises a first optical input level stabilizing circuit for detecting an optical input level of said wavelength division multiplexed signal light (hereinafter referred to as "first optical input level) and for controlling the level of a light input into said first optical amplifier to be a predetermined value (hereinafter referred to as "first predetermined optical input level").

2. An optical repeater for transmitting wavelength division multiplexed signal light according to Claim 1, wherein said first predetermined optical input level is set such that a gain of said first optical amplifier necessary for obtaining said first predetermined optical output level is a predetermined gain.

3. An optical repeater for transmitting wavelength division multiplexed signal light according to Claim 2, wherein said first predetermined optical output level is defined based on signal light contained in said wavelength division multiplexed signal light:

4. An optical repeater for transmitting wavelength division multiplexed signal light according to Claim 3, wherein said first optical input level stabilizing circuit comprises a first optical input level detecting circuit for detecting said first optical input level, a first amplified light branching device for branching a part of said second amplified wavelength division multiplexed signal light and outputting first pseudo signal light and first branched amplified light combining device for combining said first pseudo signal light into said first wavelength division multiplexed signal light and outputting first wavelength division multiplexed signal light after level control.

5. An optical repeater for transmitting wavelength division multiplexed signal light according to Claim 4, wherein said first optical input level stabilizing circuit comprises a first input light branching device for branching a part of said first wavelength division multiplexed signal light and outputting first branched wavelength division multiplexed signal light and a first light receiver for receiving said frst branched wavelength division multiplexed signal light and outputting a first optical input level controlling signal.

6. An optical repeater according to Claim 1, 2, 3, 4 or 5, wherein the wavelength of said second signal light is different from the wavelength of any signal light contained in said first wavelength division multiplexed signal light.

7. An optical repeater according to Claim 4, 5 or 6, wherein said first amplified light branching device branches only light with a wavelength that is different from both the wavelength of any signal light contained in said first wavelength division multiplexed signal light and the wavelength of said second signal light and outputs said first pseudo signal light.

8. An optical repeater for transmitting wavelength division multiplexed signal light according to Claim 7, wherein said first amplified light branching device comprises a first optical filter for reflecting light with different wavelength form each other both the wavelength of any signal light contained in said first wavelength division multiplexed signal light and the wavelength of said second signal light and passes said second signal light.

9. An optical repeater according to Claim 7 or 8, wherein said first amplified light branching device comprises a first fiber grating for outputting said second amplified signal light to a transmission path and reflecting a light with wavelength in naturally emitted light contained in said second signal light which is different from both the wavelength of signal light contained in-said first wavelength division multiplexed signal light and the wavelength of said second signal light and a first optical circulator, disposed between said second optical amplifier and said first fiber grating, for passing said second amplified signal light to said first fiber grating and for outputting a light reflected by said first fiber grating as said pseudo signal light to said first branched amplified light combining device.

10. An optical repeater according to any one of Claims 5 to 9, wherein said first amplified light branching device is a light branching device capable of controlling a branching ratio of said first pseudo signal light to said second amplified wavelength division multiplexed signal light, and said first optical input level stabilizing circuit comprises a first branching ratio controlling circuit for controlling the branching ratio of said first pseudo signal light in response to said first optical input level controlling signal.

11. An optical repeater according to any one of Claims 5 to 10, wherein said first optical input level stabilizing circuit further comprises a first variable light attenuator for controlling the attenuation amount of said first pseudo signal light and a first attenuation amount controlling circuit for controlling the attenuation amount of said first pseudo signal light in response to said first optical input level controlling signal.

12. An optical repeater for transmitting wavelength division multiplexed signal light according to Claim 11, wherein said first variable light attenuator comprises a passing wavelength band in the vicinity of the wavelength of said second signal light and the central wavelength of said passing wavelength band is variable by said first optical input level controlling signal.

13. An optical repeater according to any one of Claims 5 to 12, wherein said first optical input level stabilizing circuit further comprises a first optical filter for removing light with the same wavelength as the wavelength of signal light contained in said first wavelength division multiplexed signal light from said first pseudo signal light and outputting it.

14. An optical repeater according to Claims 3 to 13, further comprising first pseudo signal light removing filter for removing a light with the same wavelength as said first pseudo signal light from said first amplified wavelength division multiplexed signal light.

15. An optical repeater for transmitting wavelength division multiplexed signal light according to Claim 14, wherein said first pseudo signal removing filter is disposed in the outputting end of said first optical amplifier.

16. An optical repeater according to Claims 1 to 15, wherein said second signal light is a second wavelength division multiplexed signal light to which a second signal light with different wavelengths from each other is wavelength multiplexed, said second optical amplifier is an optical amplifier for optically amplifying said second wavelength division multiplexed signal light and outputting a second amplified wavelength division multiplexed signal light, and said second optical amplifier comprises a second input level stabilizing circuit for detecting the optical input level of said second wavelength division multiplexed signal light (hereinafter referred to as "second optical input level") and controlling the level of a light input into said second optical amplifier to be a predetermined value (hereinafter referred to as "second predetermined optical input level").

17. An optical repeater for transmitting wavelength division multiplexed signal light according to Claim 16, wherein said second predetermined optical input level is set such that a gain of said second optical amplifier necessary for obtaining said second predetermined optical output level will be a predetermined gain.

18. An optical repeater for transmitting wavelength division multiplexed signal light according to Claim 16, wherein said second predetermined optical level is defined based on signal light contained in said wavelength division multiplexed signal light.

19. An optical repeater according to Claim 16, 17 or 18, wherein said second optical input level stabilizing circuit comprises a second optical input level detecting circuit for detecting said second optical input level, a second amplified light branching device for branching a part of said first amplified wavelength division multiplexed signal light and outputting a second pseudo signal light and a second branched amplified light combining device for combining said second pseudo signal light into said second wavelength division multiplexed signal light and outputting a second wavelength division multiplexed signal light after level control.

20. An optical repeater according to Claim 16, 17, 18 or 19, wherein said second optical input level detecting circuit comprises a first input light branching device for branching a part of said first wavelength division multiplexed signal light and outputting a branched first wavelength division multiplexed signal light and a first light receiver for receiving said first branched wavelength division multiplexed signal light and outputting a first optical input level controlling signal.

21. An optical repeater according to any one of Claims 16 to 20, wherein the wavelength of each signal light contained in said second wavelength division multiplexed signal light is different from the wavelength of any signal light contained in said first wavelength division multiplexed signal light.

22. An optical repeater according to Claim 19, 20, or 21, wherein said second amplified light branching device branches only a light with wavelength in naturally emitted lights contained in said first wavelength division multiplexed signal light which is different from both the wavelength of any signal light contained in said second wavelength division multiplexed signal light and the wavelength of signal light contained in said first wavelength division multiplexed signal light and outputs said second pseudo signal light.

23. An optical repeater for transmitting wavelength division multiplexed signal light according to Claim 22, wherein said second amplified light branching device comprises a second optical filter for reflecting a light with wavelength in naturally emitted lights contained in said first amplified signal light which is different from both the wavelength of any signal light contained in said second wavelength division multiplexed signal light and the wavelength of signal light contained in said first wavelength division multiplexed signal light, and for passing said first wavelength division multiplexed signal light.

24. An optical repeater according to Claim 22 or 23, wherein said second amplified light branching device comprises a second fiber grating for outputting said first amplified signal light to a transmission path and for reflecting a light with wavelength in naturally emitted lights contained in said first wavelength division multiplexed signal light which is different from both the wavelength of signal light contained in any said second wavelength division multiplexed signal light and the wavelength of signal light contained in said first wavelength division multiplexed signal light and a second optical circulator disposed between said light amplifier and said second fiber grating for passing said first amplified signal light to said second fiber grating and for outputting a light reflected by said second fiber grating to a branched amplified light combining device as said pseudo signal light.

25. An optical repeater according to any one of Claims 20 to 24, wherein said second amplified light branching device is a light branching device capable of controlling a branching ratio of said second pseudo signal light to said first amplified wavelength divisional multiplexed signal light, and said second optical input level stabilizing circuit comprises a second branching ratio control circuit for controlling a branching ratio of said second pseudo signal light in response to said second optical input level control signal.

26. An optical repeater according to any one of Claims 20 to 25, wherein said second optical input level stabilizing circuit further comprises a second variable light attenuator for controlling an attenuation amount of said second pseudo signal light and a second attenuation amount control circuit for controlling an attenuation amount of said second pseudo signal light in response to said second optical input level control signal.

27. An optical repeater for transmitting wavelength division multiplexed signal light according to Claim 26, wherein said second variable light attenuator comprises a passing wavelength band in the vicinity of the wavelength of said first wavelength division multiplexed signal light and the central wavelength of said passing wavelength band is variable by said second optical input level control signal.

28. An optical repeater according to Claims 18 to 27, wherein said first optical input level stabilizing circuit further comprises a first optical filter for removing light with the same wavelength is as the wavelength of any signal light contained in said first wavelength division multiplexed signal light from said first pseudo signal light and outputting it.

29. An optical repeater according to any one of Claims 18 to 28, further comprising a second pseudo signal light removing filter for removing a light with the same wavelength as the wavelength of said second pseudo signal light from said second amplified wavelength division multiplexed signal light.

30. An optical repeater for transmitting wavelength division multiplexed signal light according to Claim 29, wherein said second pseudo signal removing filter is disposed in the output end of said second optical amplifier.

31. An apparatus for transmitting wavelength division multiplexed signal light comprising:

a first terminal station provided with a first transmitter for sending first wavelength division multiplexed signal light to a first transmission path, and a first receiver for receiving signal light from a second transmission path;
a second terminal station provided with a second transmitter for sending a second signal light to said second transmission path and a second receiver for receiving said first wavelength division multiplexed signal light from said first transmission path;
signal light add/drop node including a first signal light splitting circuit, disposed between said first terminal station and said second terminal station, for specifying a wavelength from said first wavelength division multiplexed signal light and selectively splitting and a first signal light adding circuit for combining signal light with a specific wavelength to said first wavelength division multiplexed signal light and sending it to said first transmission path; and
an optical repeater for transmitting wavelength division multiplexed signal light according to Claim 1 disposed between said first terminal station and said second terminal station.

32. An apparatus for transmitting wavelength division multiplexed signal light according to Claim 31 comprising a first pseudo signal light removing filter, disposed in the front part of said second receiver, for removing light with the wavelength of said first pseudo signal light.

33. An apparatus for transmitting wavelength division multiplexed signal light comprising:

a first terminal station provided with a first transmitter for sending first wavelength division multiplexed signal light to a first transmission path, and a first receiver for receiving a second wavelength division multiplexed signal light from a second transmission path;
a second terminal station provided with a second transmitter for sending said second wavelength division multiplexed signal light to said second transmission path and a second receiver for receiving said first wavelength division multiplexed signal light from said first transmission path;

a signal light add/drop node disposed between said first terminal station and said second terminal station including a first signal light splitting circuit, for specifying a wavelength from said first wavelength division multiplexed signal light and selectively splitting said signal light, a first signal light adding circuit for combining signal light with a specific wavelength into said first wavelength division multiplexed signal light and sending it,

a second signal light splitting circuit for specifying a wavelength from said second wavelength division multiplexed signal light and selectively splitting said signal light, and a first signal light adding circuit for combining signal light with a specific wavelength to said second wavelength division multiplexed signal light and sending it; and

an optical repeater for transmitting wavelength division multiplexed signal light according to Claim 16 disposed between said first terminal station and said second terminal station.

34. An apparatus for transmitting wavelength division multiplexed signal light according to Claim 33 comprising a first pseudo signal light removing filter, disposed in the front part of said second receiver, for removing a light with the wavelength of said first pseudo signal light and a second pseudo signal light removing filter, disposed in the front part of said first receiver, for removing a light with the wavelength of said second pseudo signal light.

35. An apparatus for transmitting wavelength division multiplexed signal light comprising:

a center node provided with a first transmitter for sending a first wavelength division multiplexed signal light to a first transmission path, a second transmitter for sending a second wavelength division multiplexed signal light to a second transmission path, a first receiver for receiving the wavelength division multiplexed signal light from the second transmission path and a second receiver for receiving signal light;

at least one signal light add/drop node, connected to said center node by said first transmission path and said second transmission path, including a first signal light splitting circuit for specifying a wavelength from said first wavelength division multiplexed signal light and selectively splitting said signal light, a first signal light adding circuit for combining signal light with a specific wavelength to said first wavelength division multiplexed signal light and sending it, a second signal light splitting circuit for specifying a wavelength from said second wavelength division multiplexed signal light and selectively splitting said signal light and a second signal light adding circuit for combining signal light with a specific wavelength to said second wavelength division multiplexed signal light and sending it; and

an optical repeater for transmitting wavelength division multiplexed signal light according to Claim 16 disposed between said center node and said signal light add/drop node or between said signal light add/drop nodes.

36. An apparatus for transmitting wavelength division multiplexed signal light according to Claim 35 comprising:

a first pseudo signal light removing filter, disposed in the front part of said second receiver, for removing light with the wavelength of said first pseudo signal light; and

a second pseudo signal light removing filter, disposed in the front part of said first receiver, for removing light with the wavelength of said second pseudo signal light.

Fig.1 PRIOR ART

# Fig.2
# PRIOR ART

SECTION A

DOWN LINE ( λ1～ λn)

BROKEN POINT

23

SECTION B

DOWN LINE ( λia)

TERMINAL STATION A

TERMINAL STATION B

20-1

20-2

λia'

λia

λi'

λi

UP LINE ( λ1'～λn')

20-3

ADM NODE

TERMINAL STATION C

EP 1 049 274 A2

PsEP 1 049 274 A2

# Fig.3
# PRIOR ART

(a)

NORMALLY
OPERATING

(b)

PART OF LINE
BROKEN

BROKEN LINE

# Fig.4
# PRIOR ART

$\lambda 1 + \lambda 2 + \lambda 3 + \lambda 4$

(a)

INPUT STRENGTH

$\lambda 4a$

t0    t

$\lambda 1 + \lambda 2 + \lambda 3 + \lambda 4$    $\lambda 4a$

(b)

OUTPUT STRENGTH (TOTAL)

t0    t

(c)

OUTPUT STRENGTH $\lambda 4a$

t0    t

# FIG.5

OPTICAL AMPLIFIER FOR SIGNAL IN DOWN LINE 100

WAVELENGTH DIVISION MULTIPLEXED SIGNAL LIGHT IN DOWN LINE

$\lambda 1 \ \lambda 2 \ \lambda 3 \cdots \lambda n$

PSEUDO SIGNAL LIGHT →

PSEUDO SIGNAL LIGHT

WAVELENGTH DIVISION MULTIPLEXED SIGNAL LIGHT IN UP LINE

$\lambda 1' \ \lambda 2' \ \lambda 3' \cdots \lambda n'$

OPTICAL AMPLIFIER FOR SIGNAL IN UP LINE

# Fig.6

SECTION A

DOWN LINE ($\lambda 1 \sim \lambda 4$)

SECTION B

DOWN LINE ($\lambda 1 \sim \lambda 3$, $\lambda 4a$)

TERMINAL STATION A

100-1  100-2  100-3  100-4  23  100-5  100-6  100-7  100-8

TERMINAL STATION B

20-1

2

UP LINE ($\lambda 1' \sim \lambda 3'$, $\lambda 4a'$)

$\lambda 4a'$  $\lambda 4a$
$\lambda 4'$  $\lambda 4$

UP LINE ($\lambda 1' \sim \lambda 4'$)

20-2

20-3

TERMINAL STATION C

ADM NODE

EP 1 049 274 A2

# Fig.7

SECTION A     BROKEN POINT         SECTION B

DOWN LINE ( λ1∼ λ4)          DOWN LINE ( λ1'∼λ4', λ4a)

TERMINAL STATION A   100-1   100-2   100-3   100-4   23   100-5   100-6   100-7   100-8   TERMINAL STATION B

20-1        20-2

2

λ4a'   λ4a

λ4'   λ4

UP LINE ( λ1'∼λ4')

20-3

ADM NODE   TERMINAL STATION C

EP 1 049 274 A2

# Fig.8

EP 1 049 274 A2

# Fig.9

$\lambda 1 + \lambda 2 + \lambda 3 + \lambda 4$

OPTICAL INPUT LEVEL
OF WAVELENGTH
DIVISION MULTIPLEXED
SIGNAL LIGHT

$\lambda 4a$

(a)

t

t0

PSEUDO SIGNAL
LIGHT

OPTICAL INPUT
LEVEL

$\lambda 1' + \lambda 2' + \lambda 3' + \lambda 4'$

(b)

t

t0

·OPTICAL OUTPUT
LEVEL (TOTAL)

(c)

t

t0

$\lambda 4a$ OUTPUT LEVEL

(d)

t

t0

# Fig.10

(1) WHEN NORMALLY
     OPERATING

STRENGIH
PinO    λ1 λ2 λ3 λ4
                              λ

⇨ WHEN NORMALLY
     OPERATING

STRENGIH
Pout    λ1 λ2 λ3 λ4
                              λ

(2) WHEN OPTICAL INPUT
     LEVEL DECREASED

(a) CONVENTIONAL
     OPTICAL AMPLIFIER LEVEL
                        DECREASE

STRENGIH
PinO    λ1 λ2 λ3 λ4
Pin
                              λ

⇨ DEGRADATION OF
     GAIN FLATNESS

STRENGIH
Pout    λ1 λ2 λ3 λ4         ↕ LARGE DISPERSION
                              λ

(b) OPTICAL AMPLIFIER
     IN ACCORDANCE
     WITH THE PRESENT
     INVENTION

STRENGIH
PinO    λ1 λ2 λ3 λ4
         λ1' λ2' λ3' λ4'
                              λ
INPUT OF OPTICAL
AMPLIFIER 1

⇨ MAINTAIN GAIN
     FLATNESS

STRENGIH
Pout    λ1 λ2 λ3 λ4
         λ1' λ2' λ3' λ4'
                              λ
OUTPUT OF OPTICAL
AMPLIFIER 1

⇨ REMOVE PSEUDO
     SIGNAL LIGHT

STRENGIH
Pout    λ1 λ2 λ3 λ4         SMALL
                            DISPERSION
                              λ
OUTPUT OF THE PRESENT
INVENTION
(IN CASE OF FIG.12)

EP 1 049 274 A2

# Fig.11

PSEUDO SIGNAL LIGHT
(e)

OPTICAL FILTER ~7

BRANCHED LIGHT
(c)

AMPLIFIED WAVELENGTH
DIVISION MULTIPLEXED
SIGNAL LIGHT IN UP LINE(a)

~15

4-2

# Fig.12

(a)

OPTICAL LEVEL OF AMPLIFIED
WAVELENGTH DIVISION
MULTIPLEXED SIGNAL LIGHT

λ1' λ2' λ3' λ4'    λd

WAVELENGTH

(b)

TRANSPARENCY RATIO OF
LIGHT BRANCHING DEVICE

100%

PASSING
AREA

BLOCKING
AREA

λ1' λ2' λ3' λ4'

WAVELENGTH

(c)

OPTICAL LEVEL OF
BRANCHED LIGHT

λ1' λ2' λ3' λ4'  λd'

(d)

TARNSPARENCY RATIO
OF OPTICAL FILTER

100%

λ1' λ2' λ3' λ4'  λd'

(e)

OPTICAL LEVEL OF
PSEUDO SIGNAL LIGHT

100%

λ1' λ2' λ3' λ4'  λd'

# Fig.13

PSEUDO SIGNAL
LIGHT (c)

AMPLIFIED WAVELENGTH
DIVISION MULTIPLEXED
SIGNAL LIGHT (a)

16

16

# Fig.14

(a)

OPTICAL LEVEL OF AMPLIFIED
WAVELENGTH DIVISION
MULTIPLEXED SIGNAL LIGHT

$\lambda 1'$  $\lambda 2'$  $\lambda 3'$  $\lambda 4'$       $\lambda d$

WAVELENGTH

(b)

TRANSPARENCY RATIO
OF FIBER GRATING

100%

$\lambda 1'$  $\lambda 2'$  $\lambda 3'$  $\lambda 4'$       $\lambda d$

WAVELENGTH

(c)

OPTICAL LEVEL OF
PSEUDO SIGNAL LIGHT

$\lambda 1'$  $\lambda 2'$  $\lambda 3'$  $\lambda 4'$

WAVELENGTH

# FIG.15

OPTICAL AMPLIFIER FOR
SIGNAL IN DOWN LINE 100

λ1 λ2 λ3 ··· λn
WAVELENGTH DIVISION
MULTIPLEXED SIGNAL
LIGHT IN DOWN LINE 16

PSEUDO SIGNAL LIGHT

PSEUDO SIGNAL LIGHT

λ1' λ2' λ3' ··· λn'
WAVELENGTH DIVISION
MULTIPLEXED SIGNAL
LIGHT IN UP LINE 15

OPTICAL AMPLIFIER FOR
SIGNAL IN UP LINE

EP 1 049 274 A2

# FIG.16

OPTICAL AMPLIFIER FOR
SIGNAL IN DOWN LINE 100'

$\lambda 1\ \lambda 2\ \lambda 3 \cdots \lambda n$
WAVELENGTH DIVISION
MULTIPLEXED SIGNAL
LIGHT IN DOWN LINE 16

$\lambda 1'\ \lambda 2'\ \lambda 3' \cdots \lambda n'$
WAVELENGTH DIVISION
MULTIPLEXED SIGNAL
LIGHT IN UP LINE

OPTICAL AMPLIFIER FOR
SIGNAL IN UP LINE

EP 1 049 274 A2

# FIG.17

OPTICAL AMPLIFIER FOR
SIGNAL IN DOWN LINE 100

WAVELENGTH DIVISION
MULTIPLEXED SIGNAL
LIGHT IN DOWN LINE 15

$\lambda 1 \ \lambda 2 \ \lambda 3 \cdots \lambda n$

WAVELENGTH DIVISION
MULTIPLEXED SIGNAL
LIGHT IN UP LINE

$\lambda 1' \lambda 2' \lambda 3' \cdots \lambda n'$

OPTICAL AMPLIFIER FOR
SIGNAL IN UP LINE

EP 1 049 274 A2

# Fig.18

EP 1 049 274 A2

TRANSPARENCY
CHARACTERISTICS
OF OPTICAL FILTER

100%

λ1    λ2    λ3    λ4a

INCREASE PSEUDO SIGNAL
LIGHT LEVEL
(ADJUST SIGNAL LIGHT TO
FILTER TRANSPARENT AREA)

TRANSPARENCY
CHARACTERISTICS
OF OPTICAL FILTER

100%

λ1    λ2    λ3    λ4a

DECREASE PSEUDO SIGNAL
LIGHT LEVEL
(SHIFT FILTER TRANSPARENT AREA)

# Fig.19